**Europäisches Patentamt**

**European Patent Office**

**Office européen des brevets**

(19)

(11) Publication number : **0 514 879 A2**

(12) # EUROPEAN PATENT APPLICATION

(21) Application number : **92108546.0**

(22) Date of filing : **20.05.92**

(51) Int. Cl.⁵ : **G06F 7/60,** G06F 15/78

(30) Priority : **20.05.91 JP 114792/91**

(43) Date of publication of application :
**25.11.92 Bulletin 92/48**

(84) Designated Contracting States :
**AT BE CH DE DK ES FR GB GR IT LI MC NL PT SE**

(71) Applicant : **OMRON CORPORATION**
**10, Tsuchido-cho, Hanazono, Ukyo-ku,**
**Kyoto-shi, Kyoto 616 (JP)**

(72) Inventor : **Tsutsumi, Yasuhiro, Omron**
**Corporation**
**Intell.Property Center, 20, Igadera,**
**Shimokaiinji**
**Nagaokakyo-City Kyoto 617 (JP)**

(74) Representative : **WILHELMS, KILIAN &**
**PARTNER Patentanwälte**
**Eduard-Schmid-Strasse 2**
**W-8000 München 90 (DE)**

(54) **Fuzzy inference processing system.**

(57)    A fuzzy inference system which has both a fuzzy inference processing device (the fuzzy inference unit) and a calculation processing device. The linguistic values in the antecedent or consequent described in the inference rule, the real numerical values in the consequent, and the values of the variables set in the calculating and computing schemes are essential to processing and are generally contained in the fuzzy inference knowledge. If these values are not present in the fuzzy inference knowledge stored in the fuzzy inference device, that device transmits to the calculation processing device the information needed to calculate them. The calculation processing device executes the calculation processing. It then sends the results of the calculations back to the fuzzy inference device, which will then continue performing the fuzzy inference.

EP 0 514 879 A2

Jouve, 18, rue Saint-Denis, 75001 PARIS

Field Of The Invention

This invention concerns a fuzzy inference processing system with an external calculation processing device.

## BACKGROUND OF THE INVENTION

Fuzzy inference entails processing data according to inference rules, each consisting of an IF clause (the antecedent) and THEN clause (the consequent). These rules are combined according to a scheme involving cumulating operations. Defined or defuzzyfied values are calculated according to a predetermined procedure, such as center of gravity.

The knowledge needed to perform fuzzy inferences is typically stored in a inference knowledge memory of the device. This knowledge includes the inference rules; the linguistic values in the antecedent or consequent described in the inference rule and their membership functions; the real numerical values in the consequent; and the values of the variables set in the scheme for computing the linguistic values, Also, in these existing devices, all the calculations involved in a fuzzy inference, including goodness of fit to the rule, synthesis of inference results, and calculation of defined values, are carried out by the fuzzy inference device as internal processing in its fuzzy inference unit.

When all calculations for a fuzzy inference are carried out as internal processing in the fuzzy inference unit of the device, certain limitations cannot be avoided. Among these are that the inference time is longer than would be required by an external device; the data and program capacities are limited by the specifications of the fuzzy inference device; and the scale of the circuits in the device is limited. Because of these limitations, there are, in some cases, unavoidable restrictions on the shape and type of the antecedent membership function, the form of the consequent, and the cumulation scheme. In such cases, the user has no choice but to select either a predetermined scheme or a limited scheme. The compactness of the fuzzy inference unit restricts how inferences may be performed and its inference capacity.

Moreover, it is not actually possible to construct a membership function of whatever shape one desires to describe the antecedent membership function or the consequent function. The shape used in existing devices to describe these functions is predetermined and can never be left to the user's discretion.

## SUMMARY OF THE INVENTION

This invention responds to the problems described above which occur in existing fuzzy inference processing units. Its purpose is to offer a fuzzy inference processing system in which the shape and type of the antecedent membership function, the form of the consequent, and the calculation scheme could be established without limitations, and without sacrificing the compactness of the fuzzy inference unit. This system also allows the user to select whatever form he desires, including a triangle, to describe the antecedent membership function and the consequent membership function. This system allows the user a high degree of freedom in establishing an inference scheme, which could then be used for the appropriate fuzzy inferences without any restrictions.

The system has both a fuzzy inference processing unit and a calculation processing device for other Processing. Essential to processing are such values as the linguistic values in the antecedent or consequent described in the inference rule; the real numerical values in the consequent, or the values of the variables set in the scheme to calculate such values. If these values are not present in the fuzzy inference knowledge stored in the fuzzy inference device, that device will transmit to the calculation processing device the information needed to calculate them. The calculation processing device will then send the results of the calculations back to the fuzzy inference device, which will then continue to perform the fuzzy inference.

## BRIEF DESCRIPTION OF THE DRAWINGS

Figure 1 shows an example of a computer system in which the fuzzy inference processing system of this invention has been implemented.

Figure 2 is a graph showing an example of a membership function associated with a single set of input data for a fuzzy inference.

Figure 3 is a graph showing another example of a membership function associated with a single set of input data for a fuzzy inference.

Figure 4 is a graph showing an example of a membership function associated with the output of a fuzzy inference.

Figure 5 is a flow chart showing an example of the flow of inference processing in the fuzzy inference processing system of this invention.

Figures 6 (A) and (B) are flow charts showing the essential operations in another example of the flow of inference processing in the fuzzy inference processing system of this invention.

Figure 7 is a graph showing an example of an antecedent membership function which may be used in a fuzzy inference in the fuzzy inference processing system of this invention.

Figure 8 is a flow chart showing another example of the flow of inference processing in the fuzzy inference processing system of this invention.

## DETAILED DESCRIPTION OF THE PREFERRED EMBODIMENT

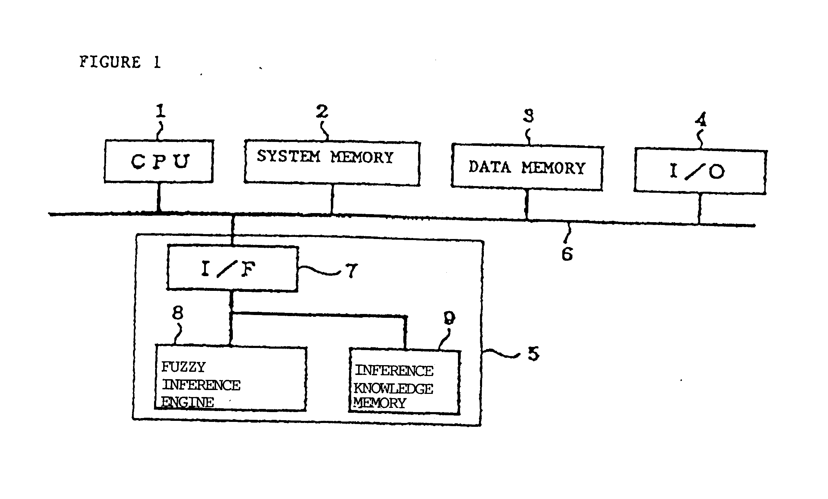

Figure 1 shows an example of a computer system in which the fuzzy inference processing system of this invention has been implemented. This computer system consists of CPU 1, system memory 2, data memory 3, I/O unit 4 and fuzzy inference unit 5, all interconnected by means of bus 6.

Fuzzy inference unit 5 contains interface circuit 7, fuzzy inference engine 8 and inference knowledge memory 9.

Fuzzy inference engine 8 performs fuzzy inferences based on the data which have been input and the fuzzy inference knowledge. This knowledge, which is stored in inference knowledge memory 9, consists of inference rules, linguistic values used in inference rules, membership functions, and so on.

In the course of a fuzzy inference, it may be found that essential data such as linguistic values in the antecedent or consequent described in the inference rule, real numerical values in the consequent, or values of the variables set in the scheme to calculate such values, are not Present in the fuzzy inference knowledge stored in inference knowledge memory 9. If this happens, fuzzy inference engine 8 will transmit to the external CPU 1 the information needed to calculate them.

CPU 1 receives the information it needs to calculate these values from fuzzy inference engine 8. It performs the calculations and outputs the results to fuzzy inference engine 8. When fuzzy inference engine 8 receives them, it resumes performing the fuzzy inference.

With this arrangement, the shape and type of the antecedent membership function in the inference rule, the form of the consequent, and the calculation scheme can be set without any restrictions due to the specifications of fuzzy inference unit 5. Furthermore, a triangular or other shape function can be selected by the user as the function which describes the antecedent membership function and the consequent function.

It is, for example, possible for the user to establish the following descriptions of inference rules and definitions of external processing and then perform a fuzzy inference.

Inference Rules Described by the User
Rule 1 : If IN1 = COS_1 and IN2 = N then OUT = P.
Rule 2 : If IN1 = P and IN2 = SIN_2 then OUT = 128.
Rule 3 : If IN1 = N and IN2 = P then OUT = AVERG.
External Processing Defined by the User
COS_1 : f (in1) = cos (in1)
SIN_2 : f (in2) = sin (in2)
AVERG : out' (in1, in2) = (in1 + in2)/2

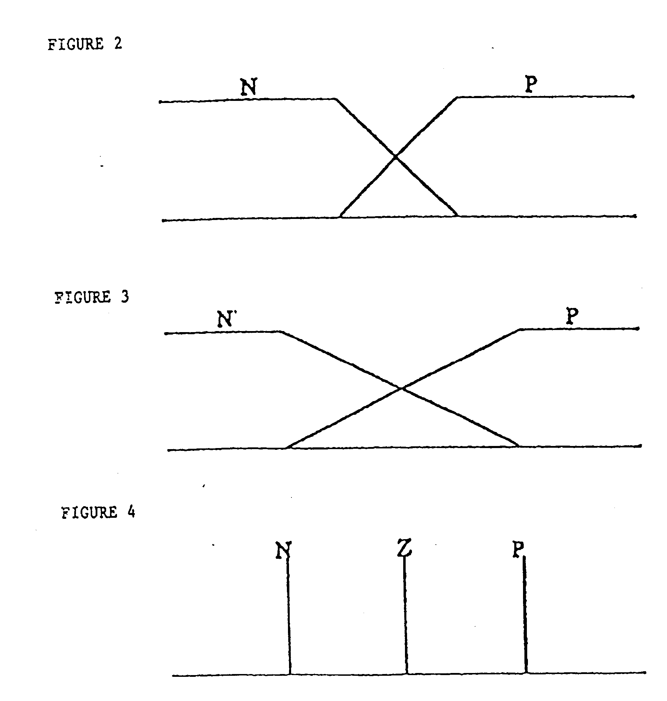

The membership functions for the linguistic values of IN1, IN2 and OUT which are used here might, for example, be like those shown in Figures 2, 3 and 4, respectively.

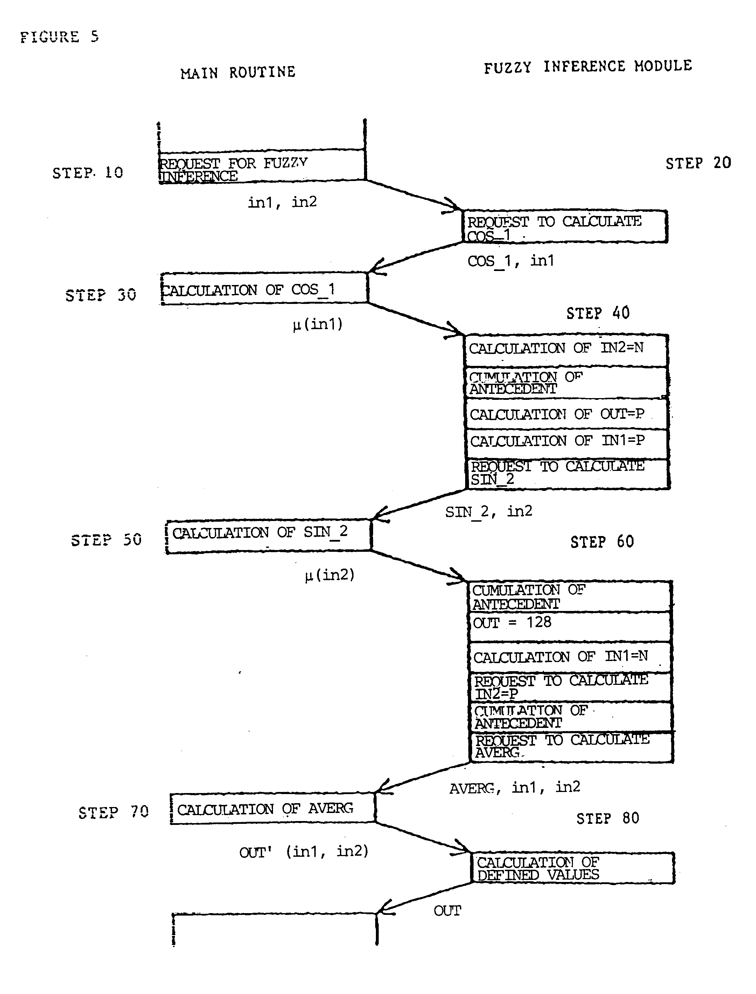

The flow of inference processing in a fuzzy inference for which the user describes the inference rules and defines the external processing, as discussed above, is shown in Figure 5.

When a fuzzy inference request is produced in the main routine of CPU1, the input values in1 and in2 are entered into fuzzy inference unit 5 (Step 10). This causes unit 5 to begin executing Rule 1. It discovers that there is a linguistic value, namely, COS_1, in the antecedent of rule one which is not defined in the fuzzy inference knowledge memory 9. The linguistic value COS_1 and the input value in1 are transmitted to CPU 1 for external processing (Step 20).

CPU 1 then calculates the goodness of fit f(in1) of the linguistic value COS_1 according to the formula f(in1) = cos (in1). It transmits this value to fuzzy inference unit 5 (Step 30).

When fuzzy inference unit 5 receives the goodness of fit f(in1) of the linguistic value COS_1, it resumes performing the fuzzy inference. It calculates the goodness of fit f(in2) of the antecedent IN2 = N; it cumulates the antecedents; it calculates the goodness of fit of the consequent OUT = P; and it calculates the goodness of fit of the antecedent of Rule 2, IN1 = P. Now it discovers the linguistic value SIN_2 in the antecedent of Rule 2 is not defined in inference knowledge memory 9. It sends this value SIN_2 to CPU 1 for external processing along with input value in2 (Step 40).

CPU 1 then calculates the goodness of fit f(in2) of the linguistic value SIN_2 according to the formula f(in2) = sin (in2). It transmits this value to fuzzy inference unit 5 (Step 50).

When fuzzy inference unit 5 receives the goodness of fit f(in2) of the linguistic value SIN_2, it resumes performing the fuzzy inference. It cumulates the antecedents; it calculates the goodness of fit of the consequent OUT = 128; and it calculates the goodness of fit of each of the antecedents of Rule 3, IN1 = N and IN2 = P. Now it discovers the linguistic value AVERG in the consequent of Rule 3, which is not defined in inference knowledge memory 9. It sends this value AVERG and the input values in1 and in2 to CPU 1 for external processing (Step 60).

CPU 1 calculates the goodness of fit out' (in1, in2) of the linguistic value AVERG according to the formula out' (in1, in2) = (in1 + in2)/2, and it sends the result to fuzzy inference unit 5 (Step 70).

When fuzzy inference unit 5 receives the goodness of fit out' (in1, in2) of the linguistic value AVERG, it calculates the defined or defuzzyfied value out for the consequent of each rule according to a center of gravity scheme or some similar method. It outputs the results to CPU 1 and completes the fuzzy inference (Step 80).

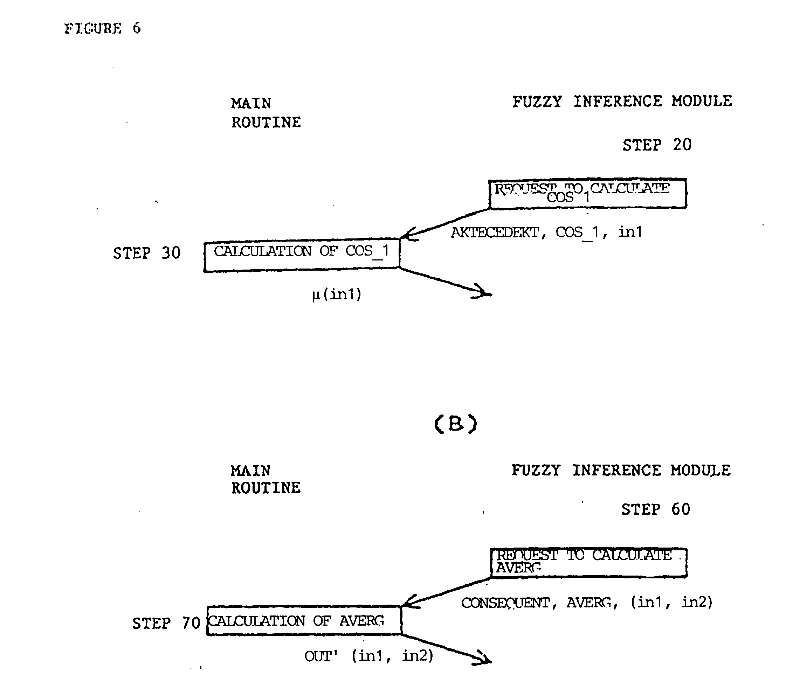

Each time fuzzy inference unit 5 requests that CPU 1 calculate a goodness of fit, it should transmit to the CPU not only the linguistic value and the input value, but also the name of the mode representing the content of the calculation, such as ANTECEDENT or CONSEQUENT, as shown in Figures 6 (A) and (B). This will enable the CPU to perform the external processing in a single batch.

In calculating the values in the consequent, sometimes the inference input is not the only data used. Variables which do not appear in the inference may also be used. The antecedent membership function need not always be a one-dimensional function, but may assume a multidimensional form. The following inference rules provide an example of this.

Rule 1 : If (in1, in2) = PP then out = AAA.

Rule 2 : If (in1, in2) = C0S_12 then out = N.

AAA : out' = in1 + in2 + other,

where "other" indicates a variable not used in the inference.

COS_12 : f(in1, in2) = cos(in1 + in2).

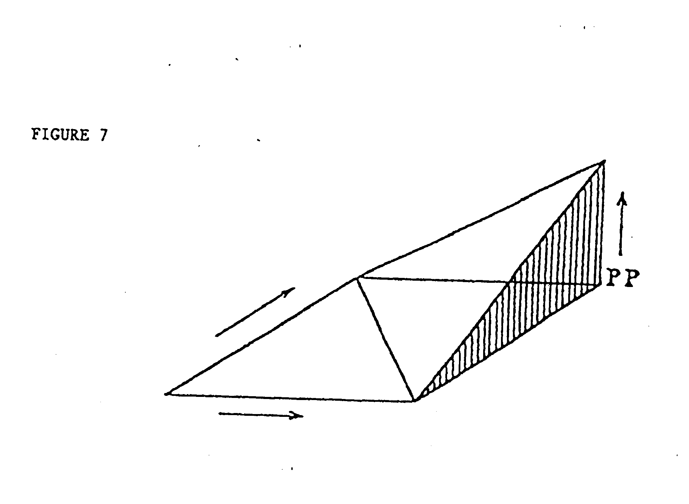

The linguistic value PP is a variable which is determined by in1 and in2, as in the example shown in Figure 7.

The external processing need not consist only of calculating the membership values and so forth in the main routine and the units under it. The CPU might also request data from the user or read membership values out of a data file.

The cumulation and calculation of defined values can also be processed externally using a scheme defined by the user in a fuzzy inference unit such that the user can select either logical cumulation or algebraic cumulation as the cumulation scheme for the consequent. Similarly, the user may select either a center of gravity scheme or a maximum height scheme as the scheme to calculate defined values.

For example, a product flag is used to determine the cumulation scheme and a defuzzy_flag is used for the scheme to calculate defined values. These schemes can be defined as follows:

If product_flag = 3

f (in1, in2) = max (f(in1) + f(in2) - 1, 0)

if defuzzy_flag = 3

out = sum( f(i) * out(i) )

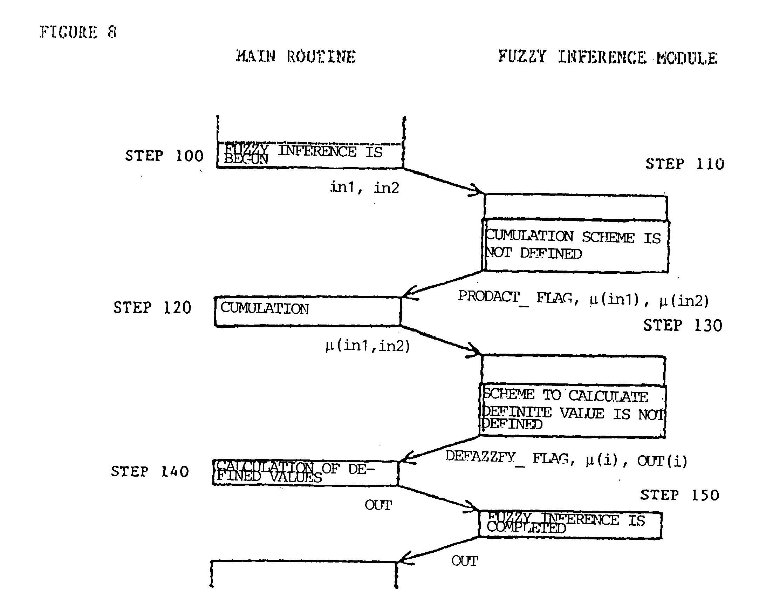

The flow of the fuzzy inference processing used here is shown in Steps 100 through 150 of Figure 8.

The fuzzy inference unit and the main routine can be executed by the same microcomputer. If this option is chosen, the fuzzy inference unit and the main routine should be realized as a program which can execute both.

It will be appreciated that modification and variations of the present invention are covered by the above teachings and within the purview of the appended claims without departing from the spirit and intended scope of the invention.

**Claims**

1.  A fuzzy logic system comprising:
    a fuzzy inference unit for performing fuzzy inferences, and
    a CPU for calculating fuzzy inference data and outputting results of said calculations to raid fuzzy inference unit, said fuzzy inference unit performing a fuzzy inference using said results output by said CPU.

2.  A fuzzy logic system as in claim 1, wherein said fuzzy inference unit comprises:
    a fuzzy inference engine, and
    an inference memory for storing data on which said fuzzy inference engine performs a fuzzy inference.

3.  A fuzzy logic system as in claim 2, wherein said inference memory stores inference rules, linguistic values used in said inference rules, and membership functions.

4.  A fuzzy logic system as in claim 3, wherein said CPU performs said calculations when said fuzzy inference engine does not contain data in said inference memory necessary for performing said fuzzy inference.

5.  A fuzzy logic system, comprising:
    a fuzzy inference unit for performing fuzzy inferences according to data stored in said fuzzy inference unit;
    requesting means for requesting additional data when said stored data is not sufficient for said fuzzy inference unit; and
    a CPU, receiving a request for data from said requesting means, for calculating said additional data and outputting said additional data to said fuzzy inference unit.

6.  A fuzzy logic system as in claim 5, wherein said requesting means requests a linguistic value.

7.  A fuzzy logic system as in claim 5, wherein said requesting means requests a membership function.

8.  A fuzzy logic system as in claim 5, wherein said requesting means requests a circulation scheme.

9.  A fuzzy logic system as in claim 5, wherein said requesting means requests a defuzzyfying scheme.

FIGURE 1

EP 0 514 879 A2

FIGURE 2

FIGURE 3

FIGURE 4

FIGURE 5

MAIN ROUTINE                              FUZZY INFERENCE MODULE

STEP 10
| REQUEST FOR FUZZY INFERENCE |                                        STEP 20

in1, in2

| REQUEST TO CALCULATE COS_1 |

COS_1, in1

STEP 30
| CALCULATION OF COS_1 |

$\mu$(in1)
                                              STEP 40

| CALCULATION OF IN2=N |
| CUMULATION OF ANTECEDENT |
| CALCULATION OF OUT=P |
| CALCULATION OF IN1=P |
| REQUEST TO CALCULATE SIN_2 |

SIN_2, in2

STEP 50
| CALCULATION OF SIN_2 |
                                              STEP 60

$\mu$(in2)

| CUMULATION OF ANTECEDENT |
| OUT = 128 |
| CALCULATION OF IN1=N |
| REQUEST TO CALCULATE IN2=P |
| CUMULATION OF ANTECEDENT |
| REQUEST TO CALCULATE AVERG |

AVERG, in1, in2

STEP 70
| CALCULATION OF AVERG |
                                              STEP 80

OUT' (in1, in2)

| CALCULATION OF DEFINED VALUES |

OUT

FIGURE 6

MAIN
ROUTINE

FUZZY INFERENCE MODULE

STEP 20

REQUEST TO CALCULATE
COS_1

AKTECEDEKT, COS_1, in1

STEP 30    CALCULATION OF COS_1

$\mu$(in1)

(B)

MAIN
ROUTINE

FUZZY INFERENCE MODULE

STEP 60

REQUEST TO CALCULATE
AVERG

CONSEQUENT, AVERG, (in1, in2)

STEP 70    CALCULATION OF AVERG

OUT' (in1, in2)

EP 0 514 879 A2

FIGURE 7

FIGURE 8

MAIN ROUTINE                    FUZZY INFERENCE MODULE

STEP 100  | FUZZY INFERENCE IS BEGUN |                    STEP 110

in1, in2

| CUMULATION SCHEME IS NOT DEFINED |

PRODACT_ FLAG, $\mu(in1)$, $\mu(in2)$

STEP 120  | CUMULATION |                    STEP 130

$\mu(in1,in2)$

| SCHEME TO CALCULATE DEFINITE VALUE IS NOT DEFINED |

DEFAZZFY_ FLAG, $\mu(i)$, OUT(i)

STEP 140  | CALCULATION OF DE-FINED VALUES |                    STEP 150

OUT

| FUZZY INFERENCE IS COMPLETED |

OUT